Europäisches Patentamt

European Patent Office

Office européen des brevets

(19)

(11) Numéro de publication: **0 259 902 B1**

# (12) FASCICULE DE BREVET EUROPEEN

(45) Date de publication de fascicule du brevet: **22.04.92**  (51) Int. Cl.⁵: **H04N  7/137**

(21) Numéro de dépôt: **87201438.6**

(22) Date de dépôt: **27.07.87**

(54) **Dispositif de codage à modulation différentielle par impulsions codées, dispositif de décodage associé et système de transmission comportant au moins un tel dispositif de codage ou de décodage.**

(30) Priorité: **13.08.86 FR 8611686**

(43) Date de publication de la demande:
**16.03.88 Bulletin  88/11**

(45) Mention de la délivrance du brevet:
**22.04.92 Bulletin  92/17**

(84) Etats contractants désignés:
**DE FR GB**

(56) Documents cités:
**DE-A- 3 417 139**

**PROCEEDINGS OF THE IEEE, vol. 73, no. 4, avril 1985, pages 592-598, IEEE, New York, US; P. PIRSCH: "Design of a DPCM codec for VLSI realization in CMOS technology"**

**REVIEW OF THE ELECTRICAL COMMUNICA-TION LABORATORIES, vol. 32, no. 5, septembre 1984, pages 829-835, Tokyo, JP; H. KURO-DA et al.: "Large-scale-intergrated digital-digital converter for video signal coding"**

(73) Titulaire: **TELECOMMUNICATIONS RADIOE-LECTRIOUES ET TELEPHONIOUES T.R.T. 88, rue Brillat Savarin F-75013 Paris(FR)**

(84) Etats contractants désignés:
**DE GB**

(73) Titulaire: **TRT TELECOMMUNICATIONS RA-DIOELECTRIOUES ET TELEPHONIOUES 88 rue Brillat Savarin F-75013 Paris(FR)**

(84) Etats contractants désignés:
**FR**

(72) Inventeur: **Boisson, Jean-Yves Société Civile S.P.I.D. 209, rue de l'Université F-75007 Paris(FR)**

(74) Mandataire: **Chaffraix, Jean et al Société Civile S.P.I.D. 156, Boulevard Haus-smann F-75008 Paris(FR)**

# Description

L'invention concerne un dispositif de codage à modulation différentielle par impulsions codées comportant une entrée pour recevoir une suite d'échantillons à coder ordonnés, une sortie pour fournir des échantillons codés, des circuits de traitement de codage notamment :

- un circuit de différence de codage pour fournir des échantillons de différence entre des échantillons d'entrée et des échantillons de prédiction de codage,
- un circuit de prédiction de codage pour fournir les échantillons de prédiction de codage à partir des échantillons codés.

Un dispositif de codage de ce genre trouve des applications importantes notamment dans le domaine de la télévision numérique.

Dans ce genre d'applications, on est confronté avec le problème de la rapidité des traitements que l'on doit effectuer. En effet, si l'on veut coder une image de télévision selon une cadence de points d'image de 13,5 MHz, on a un temps de 74 ns pour effectuer un traitement.

Si on examine le cas des dispositifs de codage à modulation différentielle conventionnels, on s'aperçoit que ce temps de 74 ns, une fois réparti entre l'opération à entreprendre par le circuit de différence, par le circuit de prédiction et aussi par d'autres circuits -tels que le circuit de quantifications et...- est insuffisant pour les circuits disponibles.

C'est pourquoi l'on a proposé d'effectuer différentes opérations en parallèle par des processeurs : voir l'article "DISTRIBUTED VLSI PROCESSORS POR PICTURE CODING" de S.C. Knauer paru dans ICC 84 Conf. Rec. (Amsterdam, PAYS-BAS, Mai 84) pages 718-723.

Le dispositif décrit dans cet article présente l'inconvénient suivant : il nécessite autant de processeurs qu'il y a d'opérations en parallèle à effectuer, sans compter les circuits de liaison qu'il faut prévoir entre les processeurs.

La présente invention propose un dispositif de codage du genre mentionné dans le préambule qui supprime, dans une large mesure, l'inconvénient précité et qui, donc, est de construction plus simple.

Un tel dispositif est remarquable en ce que les circuits de traitement de codage sont divisés en ensembles de codage pour effectuer des traitements en parallèle, en ce qu il est prévu un organe d'entrelacement pour transformer la suite d'échantillons à coder en une suite d'échantillons entrelacés selon un certain ordre, en ce que lesdits échantillons d'entrée sont les échantillons entrelacés, en ce que ledit ordre est établi pour que les échantillons de prédiction soient fournis au circuit de différence de codage simultanément avec les échantillons correspondants de la suite entrelacée et pour que les ensembles de codage effectuent le traitement en parallèle d'au moins deux échantillons de la suite entrelacée et en ce qu'un certain ensemble élabore les échantillons de sortie à partir des échantillons de différence.

L'invention concerne aussi un dispositif de décodage associé et un système de transmission comportant au moins un tel dispositif de codage ou de décodage.

La description suivante en regard de dessins annexés, le tout donné à titre d'exemple, fera bien comprendre comment l'invention peut être réalisée.

La figure 1 montre un dispositif de codage conforme à l'invention.

La figure 2 représente quelques lignes de balayage d'une image de télévision.

La figure 3 montre un organe d'entrelacement.

La figure 4 montre l'allure de quelques signaux présents dans le dispositif de codage de l'invention.

La figure 5 montre comment est réalisé l'entrelacement.

La figure 6 montre le cheminement d'échantillons dans le dispositif de codage de l'invention.

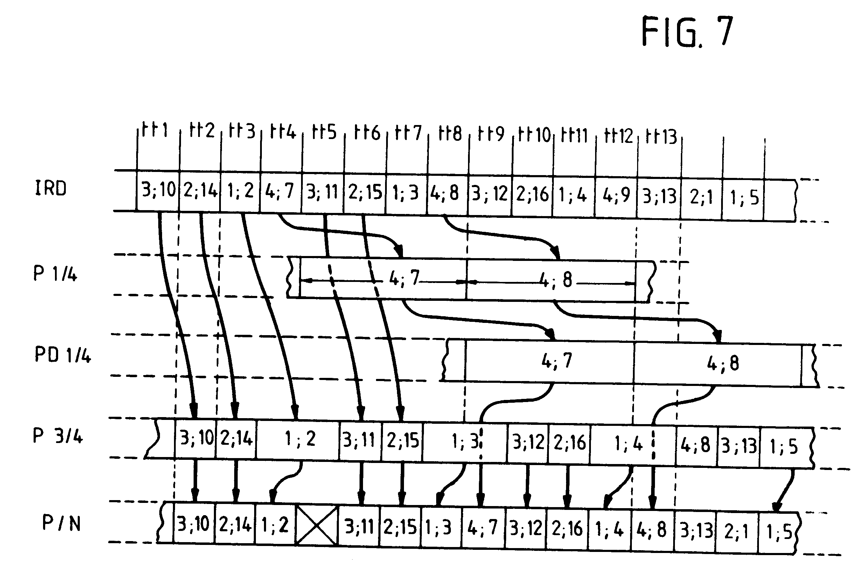

La figure 7 montre le cheminement d'échantillons dans le circuit de prédiction.

La figure 8 montre : d'une part, un dispositif de décodage conforme à l'invention, et d'autre part, un système de transmission conforme à l'invention.

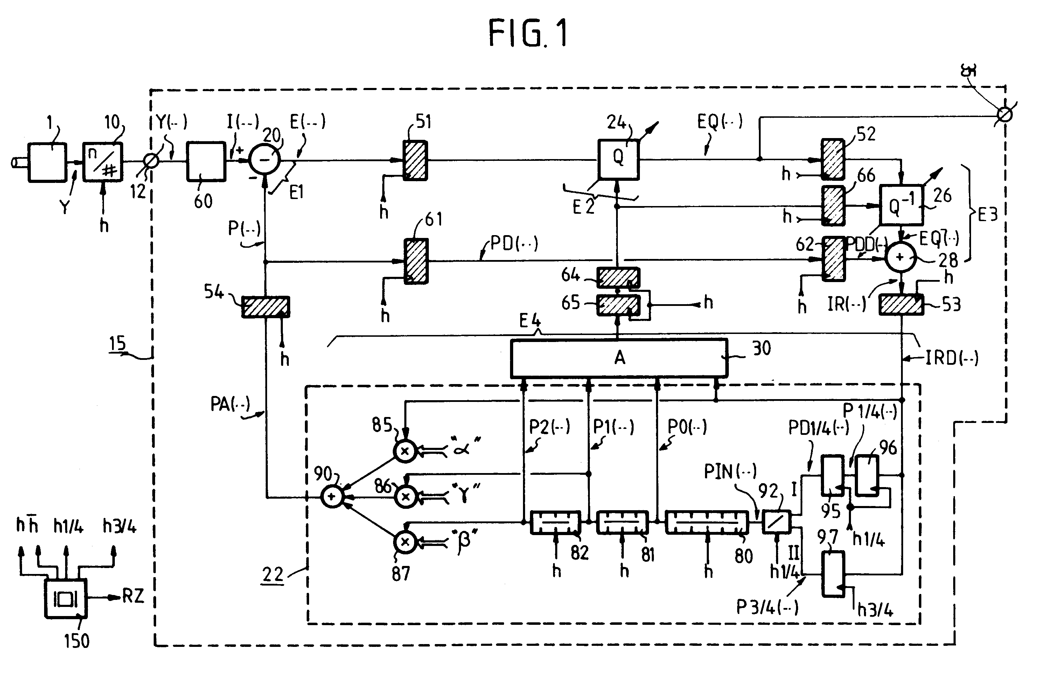

A la figure 1, la référence 1 indique une caméra de télévision qui fournit l'information "Y" concernant la luminance de l'image. Un convertisseur analogique-numérique 10 présenté à l'entrée 12 du dispositif de codage 15, conforme à l'invention, les différents échantillons numériques représentant ce signal de luminance.

Le dispositif de codage comporte :

- un circuit de différence 20 pour effectuer la différence entre un échantillon provenant de l'entrée 12 et un autre échantillon provenant d'un circuit de prédiction 22,
- un circuit de quantification directe 24 pour diminuer le nombre d'éléments binaires du résultat élaboré par le circuit de différence,
- un circuit de quantification inverse 26,
- un circuit d'addition 28 pour additionner un échantillon provenant du circuit de prédiction 22 avec l'échantillon fourni par le circuit de quantification inverse 26,
- un circuit d'activité 30 coopérant avec le circuit de prédiction qui agit sur les circuits de quantification directe 24 et de quantification inverse 26. On trouvera la définition de cette notion "d'activité" dans l'article de Peter PIRSCH intitulé "Design of DPCM Quantizers for Video Signals Using Subjective Tests" et paru en juillet 1981 dans la revue "IEEE TRANSACTIONS ON COMMUNICATIONS, VOL. COM-29, N° 7.

L'activité définit une transition de luminance entre éléments d'image ; l'activité est d'autant plus forte que la transition est brutale. A une activité forte, on associe une caractéristique grossière puisque l'on montre qu'il n'est pas necessaire de coder avec précision les niveaux situés de part et d'autre de la transition. A une activité plus faible, on associe donc une caractéristique plus fine.

Le mot codé par le dispositif 15 apparaît finalement à la borne de sortie 35 connectée en sortie du circuit de quantification 24.

Conformément à l'invention, le dispositif est remarquable en ce qu'il est divisé en quatre ensembles de circuits E1, E2, E3 et E4, et en ce qu'il est prévu des moyens d'entrelacement pour que chacun desdits ensembles effectue des opérations différentes.

L'ensemble E1 est constitué par le circuit de différence 20, l'ensemble E2 par le circuit de quantification directe 24, l'ensemble E3 par le circuit de quantification inverse 26 et le circuit d'addition 28, et l'ensemble E4 par le circuit de prédiction 22 combiné avec le circuit de mesure d'activité 30.

Les différents ensembles de circuits sont séparés par une première série de registres 51, 52, 53 et 54 placés respectivement entre les ensembles E1 et E2, entre E2 et E3, entre E3 et E4, et entre E4 et E1 ; il est aussi prévu un circuit d'entrelacement 60 pour que deux échantillons successifs, à son entrée, soient séparés par trois échantillons à sa sortie. Le dispositif de codage 15 comporte aussi une deuxième série de registres 61, 62, 64, 65 et 66 pour retarder différentes informations ; les registres 61 et 62 de cette deuxième série relient la sortie du registre 54 à une entrée de l'additionneur 28, les registres 64 et 65 relient la sortie du circuit de mesure d'activité 30 à l'entrée de commande de quantification du circuit 24 et le registre 66 relie la sortie du registre 64 à l'entrée du circuit de commande de quantification inverse 26.

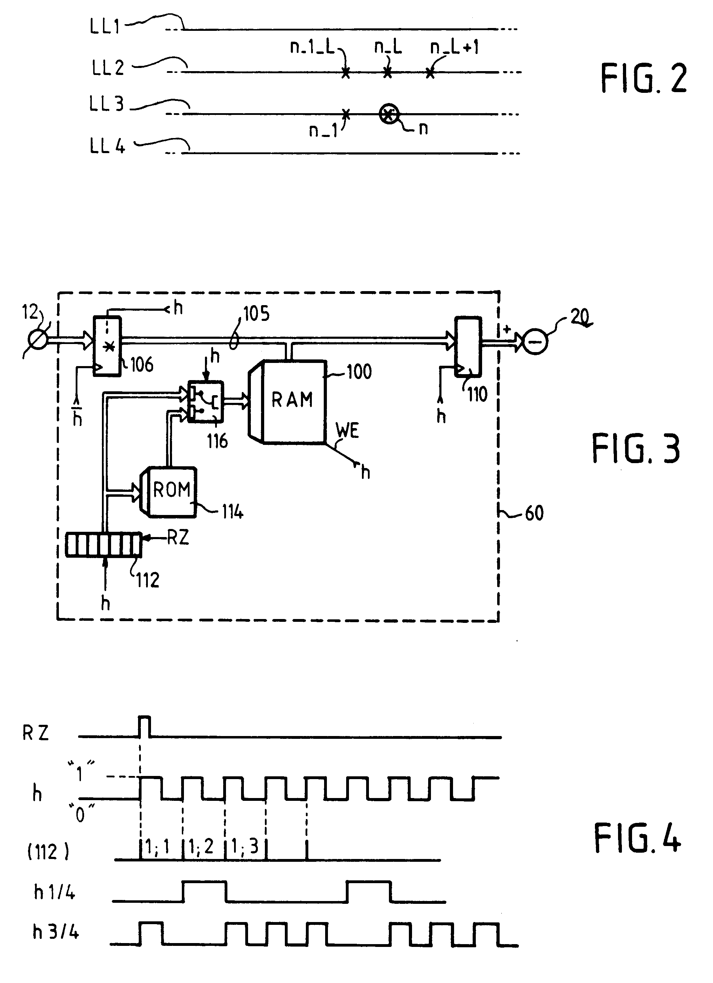

A la figure 2, on a représenté quelques lignes LL1, LL2, LL3 et LL4 de décomposition d'une image télévision, effectuée par la caméra 1. Chaque ligne est aussi décomposée en "L" points. Soit Y-(n), la luminance d'un point "n" situé sur la ligne LL3 ; le circuit de prédiction 22 déterminera la valeur de prédiction P(n) relativement à Y(n) à partir de points voisins : le point précédent "(n-1)" situé sur la même ligne LL3 et deux points sur la ligne LL2 précédente : "n-1-L" et "n-L".

La luminance prédite P(n) de ces points est fonction des valeurs de luminance IR(..) établies en sortie de l'additionneur 28 de sorte que l'on écrit :

$$P(n) = \alpha IR(n-1) + \beta IR(n-1-L) + \gamma IR(n-L) \qquad (1)$$

avec par exemple :

$\alpha$ = 0,8125

$\beta$ = -0,5625

$\gamma$ = 0,75

Le circuit de mesure d'activité 30 détermine pour le point "n" la valeur ACT(n) :

$$ACT(n) = Max|IR(i) - IR(j)| \qquad (2)$$

où "i" et "j" = n = 1, n-1-L, n-L et n-L + 1 et i ≠ j

On fera par la suite l'identification :

$$IR(n-L + 1) = P0$$

$$IR(n-L) = P1$$

$$IR(n-L-1) = P2$$

$$IR(n-1) = IRD$$

Les différentes valuers P0, P1, P2 proviennent respectivement de différents registres à décalage 80, 81 et 82 montés en cascade ; le registre 80 a six positions tandis que les registres 81 et 82 en ont quatre. La valeur IRD est déterminée par le signal de sortie du registre 53.

Pour obtenir la prédiction, on utilise trois organes de multiplication 85, 86 et 87 qui multiplient respectivement les informations IRD, P1 et P2 par $\alpha$, $\gamma$ et $\beta$, et un organe d'addition 90 fournit finalement la valeur de la prédiction à partir des résultats élaborés par les organes 85, 86 et 87.

L'entrée du registre à décalage 80 est connectée à la sortie d'un commutateur à deux positions 92. Ce commutateur, mis dans sa première position (I), connecte l'entrée du registre à décalage 80 avec la sortie d'un ensemble de deux registres 95 et 96 montés en cascade ; l'entrée de cet ensemble est branchée à la sortie du registre 53. Lorsque le commutateur 92 est mis dans sa deuxième position (II), l'entrée du registre à décalage 80 est branchée à la sortie d'un registre 97 dont l'entrée est également connectée à la sortie du registre 53.

A la figure 3, on a représenté en détail le circuit d'entrelacement 60. Il est constitué à partir d'une mémoire vive 100 ; cette mémoire emmagasine et restitue des données sur une ligne commune 105 connectée à la sortie d'un registre tampon 106 à trois états ; l'entrée de ce registre est connectée à la borne 12. Les données à enregistrer proviennent de la borne d'entrée 12 via le registre 106 et les données provenant à la mémoire 100, avant de subir l'opération du circuit de différence 20, transitent par un registre tampon 110. Cette mémoire 100 est écrite selon un code d'adresse provenant d'un compteur 112 et elle est lue selon un code d'adresse provenant d'une mémoire morte 114, adressée elle-même par le compteur 112. Cette mémoire 114 effectue donc un transcodage. Un commutateur 116 permet soit au code de fourni par le compteur 112, soit au code de sortie de la mémoire morte 114, de servir de code d'adresse pour la mémoire 100.

Toutes les opérations effectuées par le dispositif de codage de l'invention s'effectuent au rythme de signaux h, $\bar{h}$, h¼, h¾ et RZ, élaborés par une base de temps 150. L'allure de ces signaux est représentée à la figure 4.

Les signaux "h" sont appliqués au convertisseur analogique-numérique 10 aux commandes d'enregistrement des registres 51, 52, 53, 54, 61, 62, 64, 65, 66, 110 (figure 3), à la commande de décalage des registres 80, 81 et 82, à la commande d'écriture-lecture WE de la mémoire 100, à la commande de changement de position du commutateur 116, à l'entrée d'incrémentation du compteur 112 et à la mise à l'état ouvert de la sortie du registre 106.

Les signaux $\bar{h}$ complémentaires des signaux h sont appliqués à la commande d'enregistrement du registre 106.

Les signaux h¼ sont appliqués aux commandes d'enregistrement des registres 95 et 96, et à la commande de changement de position du commutateur 92 ; les signaux h¾ sont appliqués à la commande d'enregistrement du registre 97 et enfin les signaux RZ mettent à zéro le contenu du compteur 112 pour que le contenu de celui-ci corresponde à une certaine valeur qui sera explicitée plus loin lorsque le signal h¼ est actif.

Pour expliquer plus commodément le fonctionnement du dispositif de codage de l'invention, on admet que chaque ligne d'image comporte seulement seize points. Il sera facile ensuite pour un homme de l'art de généraliser à un nombre quelconque de points par ligne.

La mémoire 100 a une capacité suffisante pour contenir l'information relative à soixante-quatre points d'image répartis sur quatre lignes, divisée chacune en quatre parties PL1, PL2, PL3 et PL4. La figure 4 montre les signaux qui commandent la manière dont la mémoire 100 est écrite et lue. Ce sont les valeurs logiques des signaux "h" qui déterminent la lecture et l'écriture de cette mémoire ; pour h = 0, il y a écriture alors que pour h = 1, il y a lecture et l'on admettra que le contenu du compteur 112 s'incrémente d'une unité à chaque transition de 0 à 1 de la valeur des signaux "h". Pour chaque valeur du compteur 112 on commencera donc d'abord par une lecture (h = 1) et ensuite, on effectuera l'écriture de la mémoire 100 (h = 0). Les différents codes d'adresses pour l'écriture WAD et pour la lecture RAD sont représentés par deux chiffres séparés par ";", le premier chiffre indique le numéro de la ligne et évolue donc de 1 à 4 tandi que le deuxième indique l'emplacement sur la ligne et évolue donc de 1 à 16. Les échantillons qui apparaissent à la sortie du registre 106 sont enregistrés pour des valeurs "h" = 0 successivement dans toutes les cases de la mémoire 100. A cette valeur h = 0, l'adressage de la mémoire se fait par le contenu du compteur 112 via le commutateur 116 positionné convenablement ; la mémoire 112 est mise par ce même signal "h", appliqué à la com mande WE, en l'état d'écriture. Les codes WAD, fournis par ce compteur, évoluent continûment de 1;1 à 1;16 pour enregistrer les seize éléments d'une ligne LL1 puis de 2;1 à 2;16 pour enregistrer les éléments de la ligne suivante LL2, ensuite les éléments de LL3 pour les éléments de la ligne LL3 et enfin de 4;1 à 4;16 pour ceux de la ligne LL4 et le cycle recommence avec le code WAD : 1;1...

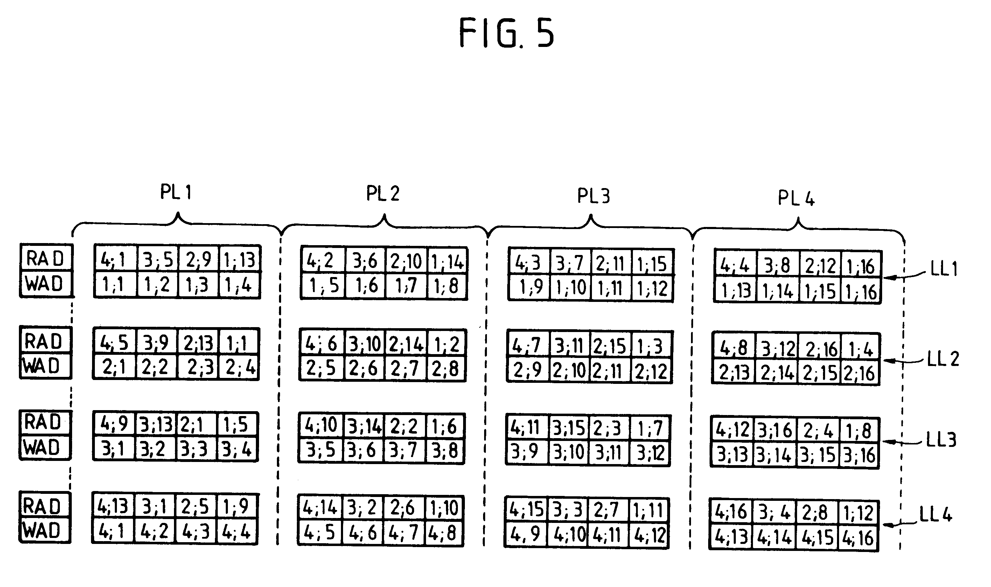

Lorsque h = 1, le commutateur 116 change de position, la mémoire 100 est adressée par le code de sortie RAD de la mémoire morte 114, la commande WE autorise cette mémoire à être lue. Ainsi, le code WAS (1;1) est engendré immédiatement après le code de lecture RAD (4;1) -ce qui correspond au premier élément du quart de ligne PL1 de la ligne 4 ; ensuite, le code d'écriture (1;2)-suit immédiatement le code de lecture (3;5), c'est-à-dire le premier élément du quart de ligne PL2 de la ligne 3... et ainsi de suite. On a donc compris que la lecture se faisait en commençant par le premier élément du quart de ligne PL1 de la ligne LL4, puis celui de PL2 de la ligne LL3, ensuite celui de PL3 de la ligne LL2, on continue avec celui du quart de ligne PL4 de la ligne LL1 ; là, on passe ensuite au deuxième élément du quart de ligne PL1 de la ligne LL4 et ainsi de suite. Si on examine alors la succession des éléments à la sortie du registre 110, les adresses sont : (4;1) (3;5) (2;9) (1;13) (4;2)... Donc, entre deux éléments successifs (4;1) et (4;2), il y a trois éléments. On peut se reporter à la figure 5 où tout l'entrelacement des échantillons est explicité ; sur cette figure on pourra constater qu'entre deux éléments enregistrés successivement, il y a, en lecture, trois éléments qui les séparent.

Il est possible maintenant de voir le cheminement des différentes informations à l'intérieur du dispositif de codage de l'invention. Ce cheminement se déroule au rythme des transitions montantes des signaux "h".

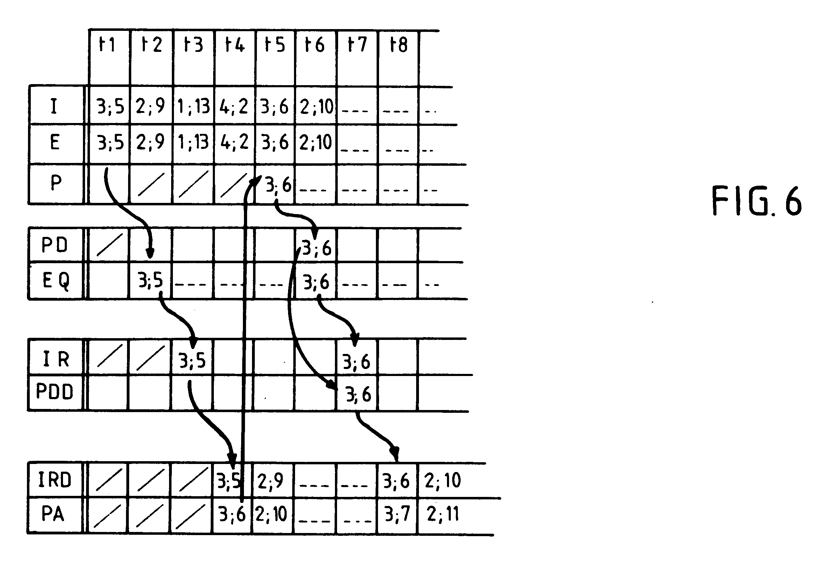

On admet qu'en un certain instant "t1" (voir figure 6) l'information I(3;5) à la sortie du circuit 60 concerne l'élément (3;5) ; à cette information, correspond une différence E formée par le circuit 20 correspondant à ce même élément, ce qui s'écrit : E(3;5) ; cette information E(3;5) va donner une information EQ(3;5) à la sortie du circuit de quantification 24, à l'instant "t2". A la sortie du circuit additionneur 28, on obtient l'information IR(3;5) à l'instant "t3". A l'instant "t4", on obtient l'information IRD(3;5) à la sortie du registre 53. Cette information IRD(3;5) est appliquée au circuit de prédiction 22 ; si on se reporte à la formule (1), relative à la prédiction, le signal de sortie PA est relatif à l'élément d'image suivant, on écrit donc : PA(3;6) ; l'information de prédiction P(3;6), qui survient à l'instant "t5", correspond bien à l'élément d'image I(3;6) qui survient à cet instant.

L'information de prédiction PD(3;6), qui survient à l'instant "t6", apparaît à la sortie du registre 61 au même instant que l'information EQ(3;6) à la sortie du circuit de quantification 24 de sorte qu'à l'instant "t7" le circuit additionneur 28 effectuera l'addition IR(3;6) des informations concernant le même élément d'image :

$$IR(3;6) = PDD(3;6) + EQ^{-1}(3;6)$$

si on appelle PDD et $EQ^{-1}$ les informations aux sorties du registre 62 et du circuit de quantification inverse 26 respectivement.

Il convient maintenant d'examiner plus en détail le cheminement des informations à l'intérieur du circuit de prédiction 22 (voir figure 1). On se place à l'instant "tt1" où l'on a l'information IRD(3;10) ; cette information est emmagasinée dans le registre 97 par une transition active du signal $h\frac{3}{4}$ et devient, à l'instant "tt2", l'information $P\frac{3}{4}(3;10)$ à la sortie du registre 97 et comme le commutateur 92 est en position II, l'information d'entrée P(IN) du registre à décalage 80 concerne toujours ce point (3;10) ; aux instants "tt2" et "tt3" apparaissent les informations IRD(2;14) et IRD(1;2) qui suivent le même chemin que l'information précédente et l'on trouve à l'entrée du registre à décalage 80 les informations PIN(2;14) et PIN(1;2) aux instants "tt3" et "tt4".

Lorsqu'apparaît l'information IRD(4;7), les signaux $h\frac{1}{4}$ deviennent actifs et les signaux $h\frac{3}{4}$ inactifs de sorte que l'on obtient dès l'instant "tt5" à la sortie de la bascule 96, l'information $P\frac{1}{4}(4;7)$ ; cette information reste jusqu'à l'instant "tt9" où, à nouveau, les signaux $h\frac{1}{4}$ deviennent actifs ; on obtient alors l'information $PD\frac{1}{4}(4;7)$ à la sortie du registre 95 et de là, on a l'entrée du registre 80, l'information PIN(4;7) à l'instant "tt9" ; l'information PIN(4;8) se trouve à l'instant "tt13". Si on considère la succession des informations IRD et la succession des informations PIN, on s'aperçoit qu'il y a un décalage des informations de la ligne 4 ; ainsi l'élément (4;7) se retrouve à la place de l'élément (4;8) et l'élément (4;8) à la place de l'élément (4;9), etc...

L'information IRD(3;10), utilisée pour fournir la prédiction PA(3;11), doit être aussi utilisée pour la prédiction PA(4;10) et PA(4;11). La prédiction PA(4;10) doit être effectuée lorsqu'apparaît IRD(4;9), c'est-à-dire à l'instant "tt12" ; on doit avoir à la sortie du registre 81 une information P1(3;10) et à la sortie du registre 82, une information P2(3;9), ce qui est facile à vérifier. On notera que le déplacement des éléments (4;...) à l'entrée du registre 80 permet de sauvegarder les bonnes informations pour les prédictions concernant la ligne 1.

Il est facile de vérifier que la mesure d'activité effectuée pour un point quelconque est bien effectuée avec les points avoisinants tels que définis à la formule (2).

En tenant compte des différents retards : on en déduit que le signal $h\frac{1}{4}$ doit être actif pour un contenu du compteur 112 (1;2) et se reproduire ainsi périodiquement, avec une période égale à quatre fois celle du signal "h" figure 4).

Il est bien évident que différentes variantes peuvent être réalisées sans sortir du cadre de l'invention. Ainsi, au lieu de grouper deux circuits en quatre ensembles, il aurait été possible d'en prendre deux ; dans ce cas, la mémoire 60 contiendrait deux lignes d'images et elle serait lue moitié par moitié au lieu de quart par quart. Bien que l'on ait décrit cette mémoire pour une organisation de lignes de 16 points, l'invention couvre bien évidemment le cas où ces lignes comporteraient un nombre bien plus élevé de points. Si, de manière générale, les lignes sont formées de 4N éléments d'images (on garde ici le cas où il y a quatre ensembles), on peut montrer que le registre 80 possède 4N-10 positions.

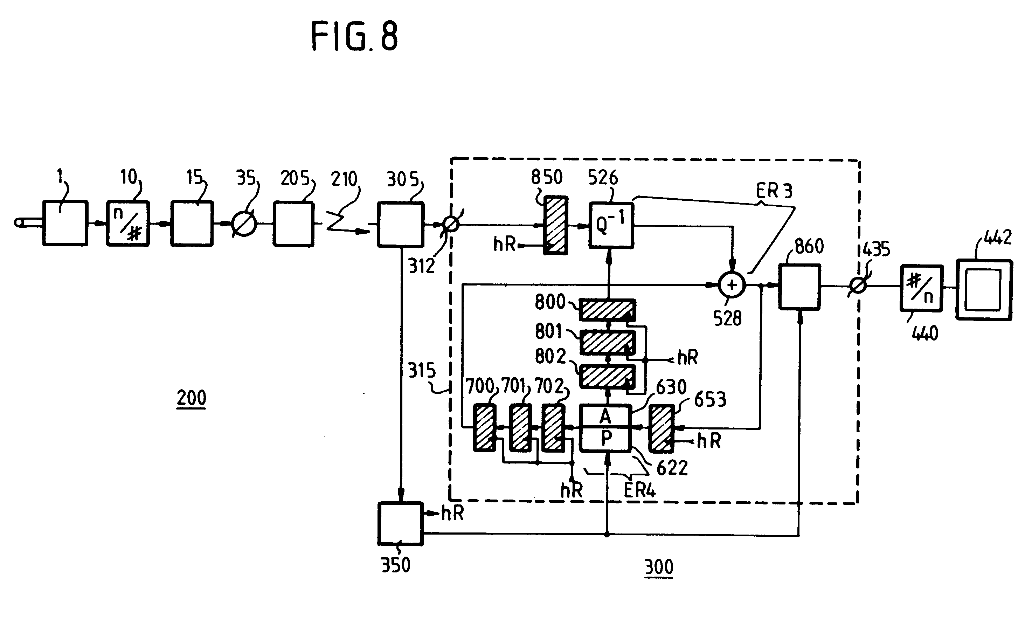

A la figure 8, on a représenté un système de transmission conforme à l'invention ; il est formé d'une part d'une partie émission 200 comportant déjà les éléments indiqués à la figure 1 et en plus un circuit de transmission 205 destiné à faire l'interface entre les données fournies à la borne 35 et le milieu de transmission représenté par une flèche 210, et d'autre part d'une partie réception 300 ; cette partie 300 comporte un circuit de réception 305 fournissant, à partir des signaux provenant un milieu de transmission, des données à une borne d'entrée 312 d'un circuit de décodage 315 conforme à l'invention et de ce fait associé au circuit de codage 15 ; le circuit 305 fournit aussi des signaux à une base de temps de réception 350. Les signaux décodés par le décodeur 315 apparaissent à la borne de sortie 435, ils sont ensuite mis sous forme analogique par le convertisseur numérique-analogique 440 pour être visualisé par une unité de visualisation 442. Le circuit de décodage 315 doit être le plus possible en correspondance avec le circuit de codage 15 ; aussi, on retrouve un ensemble de circuits ER3 comportant un circuit de quantification inverse 526 avec un circuit d'addition 528 tout comme le circuit E3 comportant les circuits 26 et 28 ; on retrouve aussi l'ensemble ER4 comportant les circuits de prédiction et de mesure d'activité 622 et 630 de structure identique à celle des circuits 22 et 30. Les ensembles de circuits ER3 et ER4 sont séparés par un registre 653. Le circuit d'addition reçoit le signal de sortie du circuit de prédiction 528 par l'inter médiaire de trois registres montés en cascade 700, 701 et 702. On retrouve aussi trois registres montés en cascade 800, 801 et 802 entre la sortie du circuit de mesure d'activité 630 et la commande du circuit de quantification inverse 526. L'entrée 312 est reliée à l'entrée du circuit de quantification inverse par l'intermédiaire d'un registre 850. La borne de sortie 435 est reliée à la sortie du circuit additionneur par un circuit de réorganisation inverse 860 dont la structure est quasi identique à celle du circuit 60. La différence étant que la mémoire morte est programmée différemment pour sortir les informations d'image les unes à la suite des autres. Les commandes d'enregistrement de ces différents registres 653, 700, 701, 702, 800, 801, 802 et 850 reçoivent les signaux "hR" représentant les signaux "h" reconstitués par la base de temps réception qui fournit également les signaux utiles pur le circuit de prédiction 622 associé au circuit de mesure d'activité 630 et pour le circuit de réorganisation inverse 860.

## Revendications

1. Dispositif de codage à modulation différentielle par impulsions codées comportant une entrée pour recevoir une suite d'échantillons à coder ordonnés, une sortie pour fournir des échantillons codés de sortie, des circuits de traitement de codage, notamment :
   - un circuit de différence de codage pour fournir des échantillons de différence entre des échantillons d'entrée et des échantillons de prédiction de codage,
   - un circuit de prédiction de codage pour fournir des échantillons de prédiction de codage à partir des échantillons codés de sortie,
   
   caractérisé en ce que les circuits de traitement de codage sont divisés en ensembles de codage pour effectuer des traitements en parallèle, en ce qu'il est prévu un organe d'entrelacement pour transformer la suite d'échantillons à coder en une suite d'échantillons entrelacés selon un certain ordre, en ce que lesdits échantillons d'entrée sont les échantillons entrelacés, en ce que ledit ordre est établi pour que les échantillons de prédiction soient fournis au circuit de différence de codage simultanément avec les échantillons correspondants de la suite entrelacée et pour que les ensembles de codage effectuent le traitement en parallèle d'au moins deux échantillons de la suite entrelacée et en ce qu'un certain ensemble élabore les échantillons de sortie à partir des échantillons de différence.

2. Dispositif de codage à modulation différentielle, caractérisé en ce qu'il comporte en outre comme circuits de traitement de codage :
   - un circuit de quantification directe pour réduire l'échantillon de différence selon plusieurs caractéristiques de transcodage direct et pour constituer le certain ensemble,
   - un circuit de quantification inverse de codage pour reformer l'échantillon de différence réduit selon les caractéristiques inverses desdites caractéristiques de transcodage,
   - un circuit de mesure d'activité de codage pour déterminer les caractéristiques directe et inverse des circuits de quantification,
   - un circuit d'addition pour fournir au circuit de mesure d'activités de codage et au circuit de prédiction de codage des échantillons représentant la somme des échantillons reformés et des échantillons de prédiction de codage.

3. Dispositif de codage à modulation différentielle selon la revendication 2, caractérisé en ce que :
   - un premier ensemble de circuits de traitement est formé du circuit de différence,
   - un deuxième ensemble est formé du circuit de quantification directe et constitue le certain ensemble,
   - un troisième ensemble est formé du circuit de quantification inverse et du circuit d'addition,
   - un quatrième ensemble est formé du circuit de mesure d'activité et du circuit de prédiction.

4. Dispositif de décodage associé à un dispositif de codage selon l'une des revendications 1 à 3, caractérisé en ce qu'il comporte une entrée pour recevoir des échantillons codés transmis entrelacés et une sortie pour fournir des échantillons de sortie codés ordonnés, des circuits de traitement de décodage, notamment :
   - un circuit d'addition de décodage pour former une suite des échantillons reconstitués entrelacés à partir des échantillons codés transmis entrelacés et des échantillons de prédiction de décodage,
   - un circuit de prédiction de décodage pour fournir les échantillons de prédiction de décodage,
   
   et en ce que les circuits de traitement de décodage sont divisés en ensembles de décodage pour effectuer simultanément chacun un traitement sur des échantillons différents et en ce qu'il est prévu un organe de désentrelacement pour transformer la suite d'échantillons reconstitués entrelacés en une suite d'échantillons de sortie décodés ordonnés.

**5.** Dispositif de décodage selon la revendication 4, caractérisé en ce qu'il comporte en outre comme circuit de traitement de décodage :
- un circuit de quantification inverse de décodage pour reformer la suite d'échantillons codés transmis entrelacés selon des caractéristiques de transcodage inverse,
- un circuit de mesure d'activité de décodage pour déterminer la caractéristique de transcodage inverse.

**6.** Système de transmission comportant un dispositif de codage selon l'une des revendications 1 à 3 et un dispositif de décodage selon l'une des revendications 4 ou 5.

**Claims**

**1.** A differential pulse code modulation arrangement having a input for receiving a sequence of ordered samples to be encoded, an output for supplying encoded output samples, processing circuits, more specifically:
- a differential encoding circuit for producing differential samples between input samples and prediction encoding samples,
- a prediction encoding circuit for producing prediction encoding samples from encoded output samples,
characterized in that the encoding processing circuits are divided into encoding units for effecting processing operations in parallel, in that a interleaving member is provided for transforming the sequence of samples to be encoded into a sequence of interleaved samples in accordance with a given order, in that said input samples are the interleaved samples, in that said order is established in order that the prediction samples are applied to the differential encoding circuit simultaneously with the corresponding samples of the interleaved sequence and in order that the encoding units effect the parallel processing operation of at least two samples of the interleaved sequence, and in that a given unit elaborates the output samples on the basis of the differential samples.

**2.** A differential pulse code modulation arrangement, characterized in that it furthermore comprises as encoding processing circuits:
- a direct quantizing circuit for reducing the differential samples in accordance with several direct encoding characteristics and for constituting the given unit,
- an inverse quantizing encoding circuit for reshaping the differential sample reduced in accordance with the inverse characteristics of said encoding characteristics,
- an activity measuring encoding circuit for determining the direct and the inverse characteristics of the quantizing circuits,
- an adder circuit for applying samples representing the sum of the reshaped samples and the prediction encoding samples to the activity measuring encoding circuit and to the prediction encoding circuit.

**3.** A differential pulse code modulation arrangement as claimed in Claim 2, characterized in that:
- a first unit of processing circuits is formed from the differential circuit,
- a second unit is formed from the direct quantizing circuit and constitutes the given unit,
- a third unit is formed from the inverse quantizing circuit and the adder circuit,
- a fourth unit is formed from the activity measuring circuit and the prediction circuit.

**4.** A decoding arrangement associated with a encoding arrangement as claimed in any one of Claims 1 to 3, characterized in that it has a input for receiving the encoded samples transmitted in the interleaved mode and an output for supplying encoded ordered output samples, decoding processing circuits, more specifically:
- an adder decoding circuit for forming a sequence of recovered interleaved samples from the encoded samples transmitted in the interleaved mode ad prediction decoding samples;
- a prediction decoding circuit for supplying prediction decoding samples, and in that the decoding processing circuits are divided into decoding units for si- multaneously effecting a processing op- eration of the different samples ad in that a deinterleaving member is provided for transforming the sequence of recovered interleaved samples into a sequence of ordered decoded output samples.

5. A decoding arrangement as claimed in Claim 4, characterized in that it furthermore includes as decoding processing circuit:
- an inverse quantizing decoding circuit for reshaping the sequence of encoded samples transmitted in the interleaved mode in accordance with inverse converting characteristics,
- an activity measuring decoding circuit for determining the inverse conversion characteristic.

6. A transmission system including a encoding arrangement as claimed in any one of Claims 1 to 3, and a decoding arrangement as claimed in any one of Claim 4 or 5.

**Patentansprüche**

1. Kodieranordnung mit differentieller Pulskodemodulation mit einem Eingang zum Empfangen einer Folge geordneter, zu kodierender Abtastwerte, einem Ausgang zum Liefern kodierter Ausgangsabtastwerte, und mit Kodierungsschaltungen, insbesondere:
- einer Kodierungsdifferenzschaltung zum Liefern von Differenzabtastwerten zwischen den Eingangsabtastwerten und den Kodierungsprädiktionsabtastwerten,
- einer Kodierungsprädiktionsschaltung zum Liefern von Kodierungspradiktionsabtastwerten aus den kodierten Ausgangsabtastwerten,
dadurch gekennzeichnet, daß die Kodierungsschaltungen in Kodierungseinheiten aufgeteilt sind zur parallelen Durchführung der Kodierung, daß ein Verschachtelungselement vorgesehen ist zur Umwandlung der zu kodierenden Folge von Abtastwerten in eine in einer bestimmten Ordnung verschachtelte Folge von Abtastwerten, daß die genannten Eingangsabtastwerte die verschachtelten Abtastwerte sind, daß die genannte Ordnung dazu gebildet ist, daß die Prädiktionsabtastwerte gleichzeitig mit den entsprechenden Abtastwerten der verschachtelten Folge der Kodierungsdifferenzschaltung zugeführt werden und daß die Kodierungseinheiten die Kodierung an mindestens zwei Abtastwerten der verschachtelten Folge parallel durchführen und daß eine bestimmte Einheit die Ausgagsabtastwerte ausgehend von den Differenzabtastwerten verarbeitet.

2. Kodieranordnung mit differentieller Modulation, dadurch gekennzeichnet daß sie außerdem als Kodierungsschaltungen die folgenden Elemente aufweist:

- eine Direktquantisierungsschaltung zum Verringern des Differenzabtastwertes entsprechend mehreren Direkt-Umkodierungskennzeichen und zum Feststellen der bestimmten Einheit,
- eine Inversionsquantisierungskodierungsschaltung zur Neugliederung des verringerten Differenzabtastwertes entsprechend den inversen Kennzeichen der genannten Umkodierungskennzeichen,
- eine Kodierungsaktivitätenmeßschaltung zum Feststellen des direkten und inversen Kennzeichens der Quantisierungsschaltungen,
- eine Addierschaltung zum zu der Kodierungsaktivitätenmeßschaltung und zu der Kodierungsprädiktionsschaltung Zuführen von Abtastwerten, welche die Summe der neugegliederten Kodierungsabtastwerte und der Kodierungsprädiktionsabtastwerte darstellen.

3. Kodieranordnung mit differentieller Modulation nach Anspruch 2, dadurch gekennzeichnet, daß:
- eine erste Einheit von Bearbeitungsschaltungen aus der Differenzschaltung gebildet ist,
- eine zweite Einheit aus der Direktquantisierungsschaltung gebildet ist und die bestimmte Einheit bildet,
- eine dritte Einheit aus der Inversionsquantisierungsschaltung und der Addierschaltung gebildet ist,
- eine vierte Einheit aus der Aktivitätenmeßschaltung und der Prädiktionsschaltung gebildet ist.

4. Dekodieranordnung zu einer Kodieranordnung nach einem der Ansprüche 1 bis 3, dadurch gekennzeichnet, daß diese Anordnung einen Eingang aufweist zum Empfangen kodierter, übertragener, verschachtelter Abtastwerte, einen Ausgang zum Liefern kodierter, gegliederter Ausgangsabtastwerte, und Dekodierungsschaltungen, insbesondere:
- eine Dekodierungsaddierschaltung zum Bilden einer Folge wiederhergestellter, verschachtelter Abtastwerte aus kodierten, übertragenen, verschachtelten Abtastwerten und aus Dekodierungsprädiktionsabtastwerten,
- eine Dekodierungsprädiktionsschaltung zum Liefern der Dekodierungsprädiktionsabtstwerte,
und daß die Dekodierungsschaltungen in Dekodierungseinheiten aufgeteilt sind um jede Bearbeitung an den jeweiligen Abtastwerten gleichzeitig durchzuführen und daß ein Entschachtelungselement vorgesehen ist um die Folge wiederhergestellter, verschachtelter Abtastwerte in eine Folge gegliederter, dekodierter Ausgangsabtastwerte umzuwandeln.

5. Dekodieranordnung nach Anspruch 4, dadurch gekennzeichnet, daß diese außerdem als Dekodierschaltung die folgenden Elemente aufweist:
   - eine Inversionsquantisierungsdekodierschaltung zur Neugliederung der Folge kodierter, übertragener, verschachtelter Abtastwerte entsprechend den Inversionsumkodierungskennzeichen,
   - eine Dekodierungsaktivitätenmeßschaltung zum Bestimmen des Inversionsumkodierungskennzeichens.

6. Übertragungssystem mit einer Kodieranordnung nach einem der Ansprüche 1 bis 3 und einer Dekodieranordnung nach einem der Ansprüche 4 oder 5.

# FIG.1

FIG. 2

FIG. 3

FIG. 4

# FIG. 5

EP 0 259 902 B1

| | PL 1 | | | | PL 2 | | | | PL 3 | | | | PL 4 | | | |
|---|---|---|---|---|---|---|---|---|---|---|---|---|---|---|---|---|---|
| RAD | 4;1 | 3;5 | 2;9 | 1;13 | 4;2 | 3;6 | 2;10 | 1;14 | 4;3 | 3;7 | 2;11 | 1;15 | 4;4 | 3;8 | 2;12 | 1;16 | LL1 |
| WAD | 1;1 | 1;2 | 1;3 | 1;4 | 1;5 | 1;6 | 1;7 | 1;8 | 1;9 | 1;10 | 1;11 | 1;12 | 1;13 | 1;14 | 1;15 | 1;16 | |
| RAD | 4;5 | 3;9 | 2;13 | 1;1 | 4;6 | 3;10 | 2;14 | 1;2 | 4;7 | 3;11 | 2;15 | 1;3 | 4;8 | 3;12 | 2;16 | 1;4 | LL2 |
| WAD | 2;1 | 2;2 | 2;3 | 2;4 | 2;5 | 2;6 | 2;7 | 2;8 | 2;9 | 2;10 | 2;11 | 2;12 | 2;13 | 2;14 | 2;15 | 2;16 | |
| RAD | 4;9 | 3;13 | 2;1 | 1;5 | 4;10 | 3;14 | 2;2 | 1;6 | 4;11 | 3;15 | 2;3 | 1;7 | 4;12 | 3;16 | 2;4 | 1;8 | LL3 |
| WAD | 3;1 | 3;2 | 3;3 | 3;4 | 3;5 | 3;6 | 3;7 | 3;8 | 3;9 | 3;10 | 3;11 | 3;12 | 3;13 | 3;14 | 3;15 | 3;16 | |
| RAD | 4;13 | 3;1 | 2;5 | 1;9 | 4;14 | 3;2 | 2;6 | 1;10 | 4;15 | 3;3 | 2;7 | 1;11 | 4;16 | 3;4 | 2;8 | 1;12 | LL4 |
| WAD | 4;1 | 4;2 | 4;3 | 4;4 | 4;5 | 4;6 | 4;7 | 4;8 | 4;9 | 4;10 | 4;11 | 4;12 | 4;13 | 4;14 | 4;15 | 4;16 | |

FIG.6

13

FIG. 7

FIG.8